Europäisches Patentamt

European Patent Office

Office européen des brevets

(19)

(11) **EP 0 941 489 B1**

(12) **EUROPEAN PATENT SPECIFICATION**

(45) Date of publication and mention
of the grant of the patent:
**05.03.2003 Bulletin 2003/10**

(51) Int Cl.[7]: **G01S 13/58**

(86) International application number:
**PCT/SE97/01559**

(21) Application number: **97942348.0**

(22) Date of filing: **16.09.1997**

(87) International publication number:
**WO 98/012574 (26.03.1998 Gazette 1998/12)**

(54) **PROCESS FOR DETERMINING THE RELATIVE VELOCITY BETWEEN TWO MOVING OBJECTS**

VERFAHREN ZUR BESTIMMUNG DER RELATIVEN GESCHWINDIGKEIT ZWISCHEN ZWEI SICH BEWEGENDEN OBJEKTEN

PROCEDE PERMETTANT DE DETERMINER LA VITESSE RELATIVE ENTRE DEUX OBJETS EN MOUVEMENT

(84) Designated Contracting States:
**DE ES FR GB IT**

(30) Priority: **18.09.1996 SE 9603389**

(43) Date of publication of application:
**15.09.1999 Bulletin 1999/37**

(73) Proprietor: **CelsiusTech Electronics AB**
**175 88 Järfälla (SE)**

(72) Inventors:
• **ECKERSTEN, Christer**
**S-175 64 Järfälla (SE)**
• **ERIKSSON, Lars, H.**
**S-112 59 Stockholm (SE)**
• **FELTER, Stefan**
**S-172 32 Sundbyberg (SE)**

(74) Representative: **Falk, Bengt et al**
**Saab Bofors Support AB**
**Patents and Trademarks**
**691 80 Karlskoga (SE)**

(56) References cited:
**US-A- 4 620 192**      **US-A- 5 334 985**
**US-A- 5 483 242**

**Description**

The present invention relates to a process for determining the relative velocity v in the radial direction between two moving objects, using linear frequency modulation with continuous frequency sweeps, a transmitted signal being multiplied by a received signal for the attainment of a resultant received signal, the phase change of which over a certain time is used to determine the relative velocity, the period length for successive frequency sweeps being varied and the difference in period length and corresponding phase change being used to determine the relative velocity v.

Such a process is previously known from US patent 5,483,242. According to the known process different period lengths are obtained by varying the gradients of the sweeps between two successive frequency sweeps. Generating sweeps with different gradients requires a rather sophisticated equipment.

It is an object of the present invention to realize a process which requires a less sophisticated equipment and which at the same time solves the problem with ambiguities when determining the velocity from the phase difference. When linear frequency modulation is used, the phase change is normally only known at $\pm n \cdot 2\pi$, where n is a positive integer.

The object of the present invention is achieved by a process characterized in that the period lengths of at least two successive frequency sweeps are varied while maintaining the gradient of the frequency sweeps constant. The process is easily realised and by studying the phase change over a time period which can be made significantly shorter than the period length for a frequency sweep, the phase change can be kept within a unambiguous interval.

The relative velocity $v$ is advantageously calculated from the relationship:

$v = k \cdot x / \Delta T$, where $x$ is the phase difference during the time $\Delta T$ which corresponds to the sum of the period lengths of the at least two successive frequency sweeps

$$k = \frac{c/2\pi}{2\alpha t_c + 2f_0},$$

where

$c$ denotes the velocity of the light in air, $\alpha$ denotes the gradient of the frequency sweep, $t_c$ denotes the clock time and $f_0$ denotes the carrier frequency of the signal.

The change of period length from a first to a second frequency sweep is adapted to given limit values for distance apart, velocity and acceleration.

At least three successive frequency sweeps maintaining the gradient of the frequency sweep constant are expediently assigned a different period length.

In order to increase the accuracy in the velocity determination, the time interval during which the phase change is studied is progressively increased without any loss of clarity. An advantageous process is characterized in that phase changes in addition to those caused by differences in period lengths are studied for one or more period lengths and/or one or more added period lengths.

The invention shall be described in greater detail below with reference to appended drawings, in which:

Figure 1    shows examples of an emitted and a received signal in the case of linear frequency modulation.
Figure 2    shows examples of frequency sweeps of constant period length.
Figure 3    shows examples of frequency sweeps according to the invention of varying period length.
Figure 4    shows a diagrammatic example of a FMCW radar device, which can be used in the process according to the invention.

Firstly, an account is given below of the theory behind linear frequency modulation. The discussion then moves on to linear frequency modulation with continuous frequency sweeps, so-called "linear FMCW".

In linear frequency modulation, a signal is ideally transmitted at the frequency $f_t(t)$:

$$f_t(t) = f_0 + \alpha t, \ t \geq 0,$$

where $\alpha$ denotes the gradient of the frequency sweep and $f_0$ the carrier frequency of the signal.

For an emitted frequency sweep, the argument $\Phi(t)$ for the transmitted signal can be written:

$$\Phi(t) = 2\pi \int_0^t f_i(\xi)d\xi = \Phi(0) + 2\pi \mid f_0 t + 1/2 \, \alpha t^2 \mid$$

In the time domain, the transmitted signal is:

$$a(t) = a_0 \sin[\Phi(0) + 2\pi(f_0 t + 1/2 \, \alpha t^2)]$$

The transmitted signal is reflected and received after the time $\tau$ and can be written:

$$b(t) = b_0 \sin[\Phi(0) + 2\pi(f_0(t - \tau) + 1/2\alpha(t - \tau)^2)]. \quad t \geq \tau$$

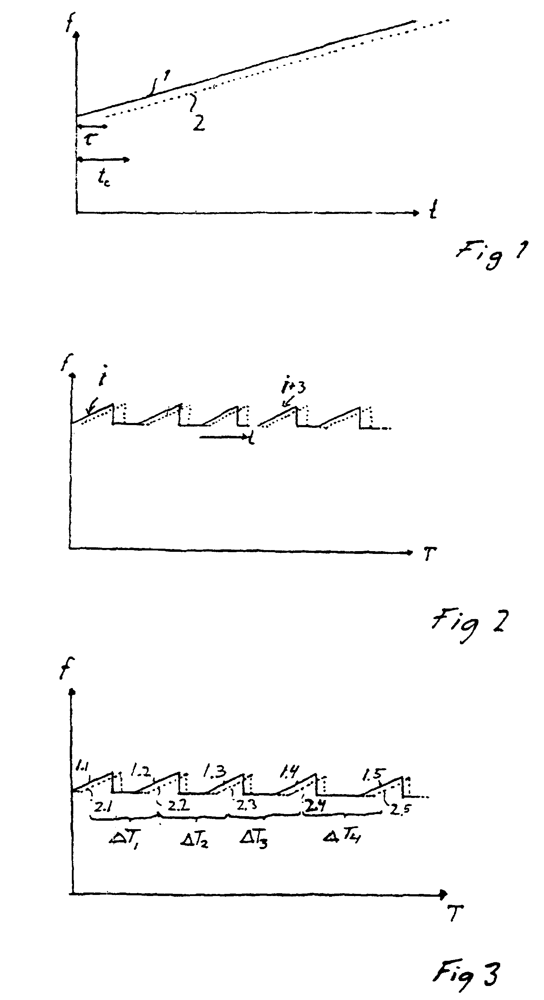

The emitted signal has been denoted by 1 and the received by 2 in Figure 1, which shows the frequency $f$ as a function of the time $t$. The transit time from the transmitter to the receiver is represented by $\tau$.

In the case of linear FMCW modulation, the sweep is allowed to proceed for a certain time, after which the procedure is repeated. Figure 2 shows examples of linear FMCW modulation with frequency sweeps of constant period length. An emitted sweep is shown by an unbroken line, whilst a return sweep has been shown by a dotted line. The frequency sweeps have been numbered with the index $i$.

The instant of each sweep is denoted by t and is regarded as local, with $t = 0$ for the start of each frequency sweep. The actual instant which is global is denoted by $T$. An object or target in the radial direction at the instant t of the frequency sweep and in respect of frequency sweep $i$, with the velocity $v$ and the constant acceleration $a$ parallel to the direction of the signal, is parametrized according to:

$$r(t) = r_i + vt + 1/2at^2$$

$$r_i = r(0)$$

applicable where i is fixed.

This gives:

$$\tau_i = 2r_i/c + 2vt/c + at^2/c,$$

where $c$ is the velocity of the light in the medium (air).

The resultant received signal, substituted by $\tau_i$, can be written:

$$c_i(t) = c_0 \cos\left[ 2\pi\left[ \frac{2\alpha\tau_i\left(1 - \frac{2v}{c} - \frac{at}{c}\right)}{c} + \frac{f_0 t(2v + at)}{c} + \frac{2\alpha v\tau^2\left(1 - \frac{v}{c}\right)}{c} + \right.\right.$$

$$\left.\left. \frac{2\alpha at^3\left(1 - \frac{2v}{c} - \frac{at}{2c}\right)}{c} + \frac{2r_i\left(f_0 - \frac{\alpha\tau_i}{c}\right)}{c} \right]\right], t \geq \tau$$

The frequency for a received sweep $i$, $f_i$, for the resultant received signal, can be written:

$$f_i(t) = \frac{d}{dt}\left[\frac{2\alpha r_i\left(1 - \frac{2v}{c} - \frac{\alpha t}{c}\right)}{c} + \frac{f_0 t(2v + \alpha t)}{c} + \frac{2\alpha v t^2\left(1 - \frac{v}{c}\right)}{c} + \frac{2\alpha \alpha t^3\left(1 - \frac{2v}{c} - \frac{\alpha t}{2c}\right)}{c}\right] =$$

$$\frac{1}{c}\left[2\alpha r_i\left(1 - \frac{2v}{c}\right) + 2vf_0 - \left(\frac{4\alpha r_i \alpha}{c} + 2f_0 + 4\alpha v\left(1 - \frac{v}{c}\right)\right)t + 6\alpha \alpha\left(1 - \frac{2v}{c}\right)t^2 - \frac{8\alpha \alpha^2}{2c}t^3\right]$$

For small values of $t$, consideration being given to incorporated terms, the expression of the frequency $f_i$ can be simplified without deviating substantially from the actual frequency. The following simplified expression of the frequency can be drawn up:

$$f_i(t) = 1/c[2\alpha r_i + 2vf_0 + 4\alpha vt].$$

We further note that $(ar_i/c)/f_0$ has a small value, thereby legitimately enabling the resultant received signal to be simplified to:

$$c_i(t) = c_{t)} \cos[2\pi[2\alpha r_i t/c + f_0 t2v/c + 2\alpha v/t_i/c + 2r_i f_0/c]], \ t \geq \tau$$

After a certain clock time $t_c$, see Figure 1, a first of a plurality of samples is taken of the signal. The argument $\Phi_i$ for the resultant received signal is referred to as the phase and can be written:

$$\Theta_i = 2\pi[2\alpha r_i t_c/c + f_0 t_c 2v/c + 2\alpha vt_c + 2r_i f_0/c]$$

If the phase difference between two sweeps i, j is taken, the following is obtained:

$$\Theta_j - \Theta_i = 2\pi(2\alpha t_c/c + 2f_0/c)(r_j - r_i)$$

The mean velocity between the instants $T_i$ and $T_j$ can then be expressed according to the following:

$$v = (r_j - r_i)/(T_j - T_i) = (\Theta_j - \Theta_i)/(T_j - T_i)\cdot(c/2\pi)/(2\alpha t_c + 2f_0)$$

A description is provided below of a process according to the invention, using successive frequency sweeps having different period length, reference being made to Figure 3.
The aim is to obtain an accurate determination of the velocity $v$ for an instant $T$. A good approximation of the velocity $v$ is obtained by, according to the invention, instead determining the mean velocity over a period of time during which the velocity can be considered essentially constant on the basis of limited acceleration.
Figure 3 illustrates five emitted consecutive FMCW sweeps 1.1-1.5 having different period lengths and the associated return sweeps 2.1-2.5. For a detected object, FFT (Fast Fourier Transform) is taken for five consecutive FMCW sweeps and five adjacent bearings. For these five FFTs, a frequency slot is designated in which the absolute value in the FFT is considered greatest. For this frequency slot, the respective phase value $\Psi_i$ is also taken, which is an approximation to $\Theta_i$.
From the FFT, five phase values are obtained:

$$\Psi_1, \ \Psi_2, \ .....\Psi_5, \ -\pi \leq \Psi_i \leq \pi, \ 1\leq i\leq 5$$

corresponding to the instants
$$T_1, T_2, ... T_5$$
The phase difference between two adjacent points then becomes:

$$\Delta\Psi_1 = (\Psi_2 - \Psi_1)_{mod\,2\pi}, \qquad \Delta T_1 = T_2 - T_1$$

$$\Delta\Psi_2 = (\Psi_3 - \Psi_2)_{mod\,2\pi}, \qquad \Delta T_2 = T_3 - T_2$$

$$\Delta\Psi_3 = (\Psi_4 - \Psi_3)_{mod\,2\pi}, \qquad \Delta T_3 = T_4 - T_3$$

$$\Delta\Psi_4 = (\Psi_5 - \Psi_4)_{mod\,2\pi}, \qquad \Delta T_4 = T_5 - T_4$$

where mod $2\pi$ denotes the modulo calculation over the interval $[\,-\pi.\pi]$

The time differences $\Delta Ti$, $1 \le i \le 4$ correspond to four PRI times (Pulse Repetition Interval). The time for a FMCW sweep can be, for example, 370 µs, the smallest PRI time being able to measure about 500 µs. In order to be able clearly to determine a phase difference under prevailing conditions, a corresponding time difference of no more than about 10 µs is required. This task is managed according to the invention by using a plurality of different PRI times and then taking the difference between these. In the numerical example, the smallest difference in PRI times is 8 µs.

Any measuring errors on phase values over short time periods will have a high impact. In order to improve the precision in the velocity determination, the phase difference is measured over longer time periods, whilst, at the same time, care is taken to ensure that clarity is not lost. The PRI times are therefore chosen such that clarity is combined with good precision in the velocity determination.

According to an example, the PRI times can have the following values:

$$\Delta T_1 = 512 \text{ µs}$$

$$\Delta T_2 = 520 \text{ µs}$$

$$\Delta T_3 = 544 \text{ µs}$$

$$\Delta T_4 = 640 \text{ µs.}$$

Inter alia, the following differences can herein be created:

$$\Delta\Delta T_1 = \Delta T_2 - \Delta T_1 \qquad 8 \text{ µs}$$

$$\Delta\Delta T_2 = \Delta T_3 - \Delta T_1 \qquad 32 \text{ µs}$$

$$\Delta\Delta T_3 = \Delta T_4 - \Delta T_1 \qquad 128 \text{ µs}$$

$$\Delta\Delta T_4 = \Delta T_1 \qquad 512 \text{ µs}$$

$$\Delta\Delta T_5 = \Delta T_3 + \Delta T_4 \qquad 1184 \text{ µs}$$

$$\Delta\Delta T_6 = \Delta T_1 + \Delta T_2 + \Delta T_3 + \Delta T_4 \qquad 2216 \text{ µs}$$

The following prediction ratios can be drawn up:

$$q_1 = \Delta\Delta T_2/\Delta\Delta T_1 = \qquad 4$$

$$q_2 = \Delta\Delta T_3/\Delta\Delta T_2 = \qquad 4$$

$$q_3 = \Delta\Delta T_4/\Delta\Delta T_3 = \qquad 4$$

$$q_4 = \Delta\Delta T_5/\Delta\Delta T_4 = \qquad 2.3125$$

$$q_5 = \Delta\Delta T_6/\Delta\Delta T_5 = \qquad 1.8716...$$

Based upon the above data, the velocity is now established by successively calculating the phase difference for the largest difference (the sum) of the PRI times. The requirement is that the first phase difference has been clearly determined. This is the case unless the velocity amount is extremely large. At each stage, firstly the phase change modulo $2\pi$, $xt$ and then the whole phase change $x$ is calculated according to the following:

1.

$$x = (\Delta\Psi_2 - \Delta\Psi_1)_{\text{mod } 2\pi}$$

2.

$$xt = (\Delta\Psi_3 - \Delta\Psi_1)_{\text{mod } 2\pi}$$

$$x = {}^{\text{integer}}((q_1 x - xt + \pi)/2\pi) \cdot 2\pi + xt$$

3.

$$xt = (\Delta\Psi_4 - \Delta\Psi_1)_{\text{mod } 2\pi}$$

$$x = {}^{\text{integer}}((q_2 x - xt + \pi)/2\pi) \cdot 2\pi + xt$$

4.

$$xt = (\Delta\Psi_1)$$

$$x = {}^{\text{integer}}((q_3 x - xt + \pi)/2\pi) \cdot 2\pi + xt$$

5.

$$xt = (\Delta\Psi_3 - \Delta\Psi_4)_{\text{mod } 2\pi}$$

$$x = {}^{\text{integer}}((q_4 x - xt + \pi)/2\pi) \cdot 2\pi + xt$$

6.

$$xt = (\Delta\Psi_1 + \Delta\Psi_2 + \Delta\Psi_3 + \Delta\Psi_4)_{\text{mod } 2\pi}$$

$$x = {}^{\text{integer}} ((q5x - xt + \pi)/2\pi) \cdot 2\pi + xt$$

where *integer*(.) is the integer component of (.). The velocity *v* is then obtained by calculating *v* from the relationship:

$$v = (x/\Delta\Delta T_6) \cdot \frac{c/2\pi}{2\alpha t_c + 2f_0}$$

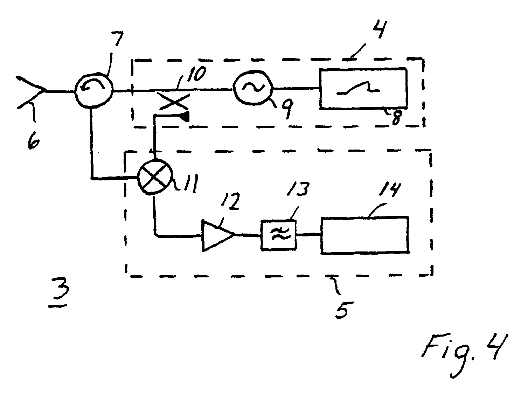

The radar device 3 shown in Figure 4, which can be used for realizing the process according to the invention, comprises a transmitter part 4 and a receiver part 5. An antenna 6 is connected to the transmitter part and the receiver part via a circulator 7. The transmitter part includes an oscillator control device 8 coupled to an oscillator 9 having variable frequency. Frequency sweeps from the oscillator control device 8 control the oscillator 9 such that a signal of periodically varying frequency is generated having varying period lengths for successive frequency sweeps. The generated signal is sent via a direction coupler 10 and the circulator 7 out on the antenna 6. The oscillator can operate within the Gigahertz range, e.g. 77 GHz. A reflected signal received by the antenna 6 is directed via the circulator to a mixer 11, where the reflected signal is mixed with the emitted signal. Following amplification in the amplifier 12 and filtering in the filter 13, the signal is fed to a processor block 14 in which, inter alia, determination of the relative velocity is carried out according to the process described above.

**Claims**

1. Process for determining the relative velocity v in the radial direction between two moving objects, using linear frequency modulation with continuous frequency sweeps, a transmitted signal being multiplied by a received signal for the attainment of a resultant received signal, the phase change of which over a certain time is used to determine the relative velocity, the period length for successive frequency sweeps being varied and the difference in period length and corresponding phase change being used to determine the relative velocity v, **characterized in that** the period lengths of at least two successive frequency sweeps are varied while maintaining the gradient of the frequency sweeps constant.

2. Process according to Patent Claim 1, **characterized in that** the relative velocity *v* is calculated from the relationship:
   $v = k \cdot x / \Delta T$, where *x* is the phase difference during the time $\Delta T$ which corresponds to the sum of the period lengths of the at least two successive frequency sweeps

$$k = \frac{c / 2\pi}{2\alpha t_c + 2f_0},$$

   where
   *c* denotes the velocity of the light in air, $\alpha$ denotes the gradient of the frequency sweep, $t_c$ denotes the clock time and $f_0$ denotes the carrier frequency of the signal.

3. Process according to any one of the preceding patent claims, **characterized in that** the change of period length from a first to a second frequency sweep is adapted to given limit values for distance apart, velocity and acceleration.

4. Process according to any one of the preceding patent claims, **characterized in that** at least three successive frequency'sweeps maintaining the gradient of the frequency sweeps constant are assigned a different period length.

5. Process according to any one of the preceding patent claims, **characterized in that** phase changes in addition to those caused by differences in period lengths, are studied for one or more period lengths and/or one or more added period lengths.

**Patentansprüche**

1.  Verfahren zum Bestimmen einer Relativgeschwindigkeit (v) in radialer Richtung zwischen zwei sich bewegenden Objekten unter Verwendung von linearer Frequenzmodulation mit kontinuierlichen Frequenzhüben der Modulation, wobei ein übertragenes Signal mit einem empfangen Signal multipliziert wird, um ein resultierendes empfangenes Signal zu erzielen, dessen Phasenänderung über eine gewisse Zeit zur Bestimmung der Relativgeschwindigkeit verwendet wird, wobei die Periodenlänge für folgende Frequenzhübe variiert wird und die Differenz in der Periodenlänge und entsprechende Phasenänderung zum Bestimmen der Relativgeschwindigkeit (v) verwendet wird,
    **dadurch gekennzeichnet, daß** die Periodenlängen von wenigstens zwei aufeinanderfolgenden Frequenzhüben variiert werden, während der Gradient der Frequenzhübe konstant gehalten wird.

2.  Verfahren nach Anspruch 1,
    **dadurch gekennzeichnet, daß** die Relativgeschwindigkeit (v) berechnet wird aus der Beziehung:
    v = k · x/ΔT, wobei x die Phasendifferenz während der Zeit ΔT ist, welche der Summe der Periodenlängen von wenigstens zwei aufeinanderfolgenden Frequenzhüben entspricht,

    $$k = \frac{c/2\pi}{2\alpha t_c + 2f_0},$$

    wobei
    c die Lichtgeschwindigkeit in Luft bezeichnet, α den Gradienten des Frequenzhubes bezeichnet, $t_c$ die Taktzeit und $f_0$ die Trägerfrequenz des Signals bezeichnet.

3.  Verfahren nach einem der vorstehenden Ansprüche,
    **dadurch gekennzeichnet, daß** die Änderung der Periodenlänge von einem ersten bis zu einem zweiten Frequenzhub an gegebene Grenzwerte für den Abstand, die Geschwindigkeit und Beschleunigung angepaßt ist.

4.  Verfahren nach einem der vorstehenden Ansprüche,
    **dadurch gekennzeichnet, daß** wenigstens drei aufeinanderfolgende Frequenzhübe, welche den Gradienten der Frequenzhübe konstant halten, einer unterschiedlichen Periodenlänge zugeordnet sind.

5.  Verfahren nach einem der vorstehenden Ansprüche,
    **dadurch gekennzeichnet, daß** Phasenänderungen zusätzlich zu jenen durch die Unterschiede in der Periodenlänge verursachten für eine oder mehrere Periodenlängen und/oder eine oder mehrere hinzugefügte Periodenlängen studiert werden.


**Revendications**

1.  Procédé pour déterminer la vitesse relative *v* dans la direction radiale entre deux objets mobiles, en utilisant la modulation de fréquence linéaire avec balayages de fréquence continus, un signal transmis qui est multiplié par un signal reçu pour l'acquisition d'un signal reçu résultant, dont le changement de phase est utilisé pour déterminer la vitesse relative pendant un certain temps, la longueur de période pour les balayages de fréquence successifs étant variable et la différence de longueur de période et de changement de phase correspondant étant utilisés pour déterminer la vitesse relative v, **caractérisé en ce que** les longueurs de période d'au moins deux balayages de fréquence successifs varient tout en maintenant le gradient des balayages de fréquence constant.

2.  Procédé selon la revendication 1 **caractérisé en ce que** la vitesse relative *v* est calculée à partir de la relation :
    *v = k x /ΔT,* où *x* est la différence de phase durant le temps *ΔT* correspondant à la somme des longueurs de période d'au moins deux balayages de fréquence successifs

    $$k = \frac{c/2\pi}{2\alpha t_c + 2f_0},$$

    où

c indique la vitesse de la lumière dans l'air, $\alpha$ indique le gradient de balayage de fréquence, $t_c$ indique le temps d'horloge et $f_0$ indique la fréquence porteuse du signal.

3. Procédé selon l'une quelconque des revendications précédentes **caractérisé en ce que** le changement de longueur de période d'un premier à un second balayage de fréquence est adapté à des valeurs limites données pour la vitesse et l'accélération à distance.

4. Procédé selon l'une quelconque des revendications précédentes, **caractérisé en ce qu'**au moins trois balayages de fréquence successifs qui maintiennent le gradient des balayages de fréquence constant sont dotés d'une longueur de période différente.

5. Procédé selon l'une quelconque des revendications précédentes, **caractérisé en ce que** les changements de phase outre ceux causés par les différences dans les longueurs de période, sont étudiés pour une ou plusieurs longueurs de période et/ou une ou plusieurs longueurs de période supplémentaires.

Fig 1

Fig 2

Fig 3

Fig. 4